**Europäisches Patentamt**

**European Patent Office**

**Office européen des brevets**

(11) Veröffentlichungsnummer: **0 081 825**
**B1**

(12) **EUROPÄISCHE PATENTSCHRIFT**

(45) Veröffentlichungstag der Patentschrift:
**26.11.86**

(21) Anmeldenummer: **82111455.0**

(22) Anmeldetag: **10.12.82**

(51) Int. Cl.⁴: **E 04 B 1/78,** F 16 L 59/04,
B 32 B 19/00, C 04 B 28/24

(54) Durch Pressen verdichteter Wärmedämmkörper aus einem hochdispersen Dämmaterial, sowie Verfahren zu seiner Herstellung.

(30) Priorität: **10.12.81 DE 3149004**
**05.08.82 DE 3229318**

(43) Veröffentlichungstag der Anmeldung:
**22.06.83 Patentblatt 83/25**

(45) Bekanntmachung des Hinweises auf die Patenterteilung:
**26.11.86 Patentblatt 86/48**

(84) Benannte Vertragsstaaten:
**AT BE CH DE FR GB IT LI LU NL SE**

(56) Entgegenhaltungen:
**AT-B-237 501**
**DE-A-2 455 500**
**DE-A-2 636 430**
**DE-A-2 849 246**
**DE-A-2 918 689**
**DE-A-2 942 087**
**DE-B-2 049 054**

(73) Patentinhaber: **Grünzweig + Hartmann und Glasfaser AG, Bürgermeister- Grünzweig- Strasse 1-47, D-6700 Ludwigshafen am Rhein (DE)**

(72) Erfinder: **Kummermehr, Hans, Prinzregentenstrasse 25a, D-6700 Ludwigshafen (DE)**

(74) Vertreter: **Kuhnen, Wacker & Partner, Schneggstrasse 3-5 Postfach 1729, D-8050 Freising (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen durch Pressen verdichteten Wärmedämmkörper aus einem hochdispersen Dämaterial, nach dem Oberbegriff des Anspruchs 1, sowie ein zu seiner Herstellung besonders geeignetes Verfahren.

Derartige hochdisperse Dämaterialien werden durch die Anmelderin unter der Bezeichnung MINILEIT (eingetr. Warenzeichen) hergestellt und vertrieben und bestehen aus einem aus der Flammenhydrolyse gewonnenen mikroporösen Oxidaerogel, insbesondere Kieselsäureaerogel und/oder Aluminiumoxidaerogel, ggf. mit geeigneten Zuschlagstoffen wie verstärkenden Mineralfasern und/oder Trübungsmittel.

Wie in diesem Zusammenhang etwa in der DE-C-1 954 992 ausführlich erläutert ist, besteht das wesentliche Problem, daß aus solchen feindispersen Stoffen hergestellte Preßkörper zwar ausgezeichnete Wärmedämmeigenschaften besitzen, mechanisch aber kaum belastbar sind. Bei der Handhabung solcher durch Pressen verdichteter Wärmedämmkörper bröselt bereits bei geringen mechanischen Beaufschlagungen das mikroporöse Material an der Oberfläche ab. Die mechanischen Eigenschaften derartiger Formkörper ähneln denjenigen von beispielsweise gebundenem feinem Sand oder dgl..

Nach der Lehre der genannten DE-C-1 954 992 soll ein solcher Wärmedämmkörper dadurch eine bessere mechanische Belastbarkeit erhalten, daß er von einer flexiblen Umhüllung umgeben ist, die mit Druck am Preßstoff anliegt. Gemäß der weiteren Lehre etwa der DE-C-2 036 124 soll das Pressen des mikroporösen Stoffes in der Umhüllung so geführt werden, daß eine möglichst innige Verzahnung der feindispersen Stoffe untereinander und mit der Oberfläche bzw. den Poren der relativ rauhen Umhüllung beispielsweise aus Glasgewebe erfolgt. Hierdurch soll eine Verwendung von beispielsweise harzartigen Bindemitteln, welche die Wärmedämfähigkeit beeinträchtigen, vermieden werden.

Mit derartigen Umhüllungen lassen sich zwar die mechanischen Eigenschaften von Wärmedämmkörpern auf der Basis solcher mikroporöser Preßstoffe in gewissem Umfange verbessern, jedoch reicht diese Verbesserung nur für eine relativ geringe Anzahl von Anwendungsfällen aus und scheiden durch die notwendige Umhüllung aus Glasgewebe oder dgl., ganz abgesehen von dem erforderlichen Aufwand hierfür, sehr viele weitere Anwendungsfälle aus, bei denen eine solche Umhüllung stört oder überhaupt nicht verwendbar ist.

Beispielsweise aus der DE-A-2 942 087 ist auch bekannt, derartiges hochdisperses Dämaterial mittele eines Bindemittels zu "härten". Danach liegt das Bindemittel, welches in einem Vorgemisch gleichförmig mit einem Dispergiermittel verteilt ist, feindispers vor, so daß die Aerogel- und Trübungsmittelteilchen an ihren Kanten und Ecken im Verbund homogen kreuzvernetzt werden. Hierdurch entsteht ein Wärmedämmkörper höherer Biegefestigkeit, die sich durch die mittels des Bindemittels miteinander verbackenen Aerogel- und Trübungsmittelteilchen ergibt, welche einen festen, starren Verbund bilden.

Mittels eines solchen Härtungseffektes wird keine Verminderung der Sprödigkeit, sondern nur eine Erhöhung der Festigkeit bis zum Eintritt des Sprödbruches erreicht, und nach wie vor führen relativ geringe mechanische Beaufschlagungen zu einem Abbröseln des mikroporösen Materials von der Oberfläche des Wärmedämmkörpers.

Gemäß der EP-A- 59 860 ist es Stand der Technik, einen solchen hochdispersen Preßstoff mit einem Mineralfaserzuschlag derart zu versehen, daß zwischen 10 und 30 Gew.-% des Preßstoffes aus Mineralfasern mit einer größeren Länge als 10 mm bestehen. Bei Einhaltung weiterer kritischer Parameter ergibt sich hierdurch eine sprunghaft erhöhte Biegbarkeit eines solchen Wärmedämmkörpers in Folien- oder Plattenform. Zur Verbesserung der mechanischen Integrität bei einer Biegung kann dabei auch vorgesehen sein, eine oder beide Seiten eines solchen Wärmedämmkörpers mit einer Folie oder einem Blech zu kaschieren, so daß die Biegbarkeit weiter verbessert wird. Eine solche Kaschierung ist jedoch im Rahmen der EP-A-59 860 ausschließlich auf den Fall der hohen Zuschlagmenge an langen Mineralfasern beschränkt.

Aufgabe der Erfindung ist es, einen Wärmedämmkörper der gattungsgemäßen Art, der ohne Umhüllung aus Glasgewebe oder dgl. gepreßt ist, derart zu schaffen, daß die Beschädigungsgefahr bei der Handhabung deutlich vermindert ist.

Diese Aufgabe wird durch das kennzeichnende Merkmal des Anspruchs 1 gelöst.

Damit wird erreicht, daß die Herstellung des Wärmedämmkörpers in einer hierzu bekannten Weise ohne Umhüllung durch Pressen erfolgen kann, wonach dann die Kaschierungsbahn aufgebracht wird. Die Kaschierungsbahn dient zunächst zum Schutz der empfindlichen Oberfläche des Wärmedämmkörpers insbesondere im Sinne einer Erhöhung der Abriebfestigkeit bei der Handhabung usw.. Infolge der Verbindung zwischen der Oberfläche des Wärmedämmkörpers und der Kaschierungsbahn ergibt sich weiterhin ein mehr oder weniger ausgeprägter Verbundeffekt, der darüber hinaus auch die Bruchfestigkeit des Wärmedämmkörpers verbessert.

Eine besondere Problematik liegt in der Befestigung der Kaschierungsbahn an der Oberfläche des Wärmedämmkörpers, da dieserauch nach Erzielung eines Härtungseffektes durch ein Bindemittel die Teilchen nur mit relativ geringer Haftung untereinander enthält. Die vergleichsweise geringe Abriebfestigkeit der Oberfläche führt somit zu entsprechenden Problemen bei der Befestigung der Kaschierungsbahn. Es stand nicht zu erwarten, daß überhaupt an der Oberfläche eines solchen Wärmedämmkörpers eine Kaschierungsbahn flächig dauerhaft befestigt werden kann, wenn auf eine vollständig geschlossene Umhüllung verzichtet wird, in welche das Material unter Druck eingepreßt ist.

Erfindungsgemäß ist jedoch eine Befestigung der Kaschierungsbahn mittels eines insbesondere anorganischen und bei der Verarbeitung gut fließfähigen Klebers überraschend möglich. Ein zu zähflüssiger Kleber, der nicht in die Oberfläche des Wärmedämmkörpers eindringt, kann nur an der äußersten Schicht der hochfeinen Teilchen verankern, so daß diese äußerste Schicht ohne Schwierigkeiten zusammen mit der Kaschierungsbahn und dem Kleber vom restlichen Preßstoff separiert werden kann. Ein ausreichend fließfähiger, nicht zu zähflüssiger Kleber hingegen dringt in die Oberfläche des Preßstoffs ein. Da die Teilchengröße des feindispersen Dämmaterials äußerst gering ist, genügt schon ein geringfügiges Eindringen des Klebers, um eine Vielzahl von Teilchenschichten zu umgreifen und zu verbacken, und so eine saubere Verankerung herbeizuführen. Da der Wärmedurchlaßwiderstand des hochwirksamen Wärmedämmaterials durch den Kleberzusatz abnimmt, muß andererseits ein zu tiefes Eindringen eines zu dünnflüssigen, zu wäßrigen Klebers in das hygroskopische Material des Wärmedämmkörpers vermieden werden. Erfindungsgemäß wird auf diese Weise in der Oberfläche des Wärmedämmkörpers eine Kleberschicht erzeugt, die eine geringere Dicke als 1 mm, vorzugsweise eine geringere Dicke als 0,5 mm besitzt, zumal bei größeren Kleberschichtdicken im Bereich unterhalb der Oberfläche des Dämmaterials eine merkliche Verbesserung der Festigkeit nicht mehr zu beobachten ist.

Während als Kleber grundsätzlich auch organische Kleber in Frage kommen, jedoch häufig im Hinblick auf die Temperaturbelastung des Wärmedämmmkörpers in Einsatz ungeeignet sind, eignen sich insbesondere anorganische Kleber. Da der Wärmedämmkörper selbst formsteif ist, ist es auch nicht erforderlich, daß der Kleber gute elastische Eigenschaften besitzt, so daß auch von daher ein anorganischer Kleber wie insbesondere ein Kleber auf der Basis von Wasserglas verwendet werden kann. Wegen weiterer Einzelheiten bezüglich eines solchen Klebers wird auf die DE-B-2 460 543 verwiesen und ausdrücklich Bezug genommen.

Die Haftwirkung mittels eines solchen Klebers kann bei Bedarf mechanisch etwa durch Strukturierung einer folienförmigen Kaschierungsbahn mittels Prägewalzen oder dgl. unterstützt werden.

Ein weiterer Vorteil ergibt sich schließlich dadurch, daß im Falle der Verwendung einer Metallfolie wie einer Aluminiumfolie oder einer Edelstahlfolie zugleich eine dampfdiffusionsdichte Abdeckung des Wärmedämmkörpers erzielt wird. Dies ermöglicht einen Einsatz eines solchen kaschierten Materials auch dort, wo eine Dampfsperre erforderlich ist. Insbesondere im Falle einer hochtemperaturfesten Metallfolie wie einer Edelstahlfolie eignet sich ein solcher Wärmedämmkörper darüber hinaus auch zu einem Hochtemperatureinsatz, und ist bereits durch die Folie gegen Erosion und sonstige mechanische Belastungen insbesondere durch vorbeiströmende Gase geschützt.

Bei einem Zusatz von in der Wärme aushärtendem Bindemittel ergeben sich lokal unterschiedliche, vom jeweiligen Raumgewicht und der jeweiligen lokalen Zusammensetzung abhängige Schrumpfungen und sonstige Formänderungen des Wärmedämmkörpers. Dadurch liegt der Wärmedämmkörper bei der Entnahme aus dem Härtungsofen mit unregelmäßiger Oberfläche vor, die nicht plan ist.

Um hier abzuhelfen, ist es bei einem derartigen gehärteten Wärmedämmkörper gemäß Anspruch 8 vorgesehen, daß der Kleber wenigstens einseitig als Deckschicht mit einer die Oberflächenunebenheiten des Wärmedämmkörpers ausgleichenden Schichtdicke aufgebracht ist. Hierdurch können Unebenheiten ausgeglichen werden. Bei Bedarf kann eine Egalisierung der Oberfläche der noch zumindest plastischen Deckschicht durch Rakeln oder dgl. erfolgen, um eine glatte Oberfläche zu erzielen.

Als Kleber für die Deckschicht kommt etwa ein Wasserglaskleber bevorzugt in Frage. Es wird zunächst eine solche Deckschicht aus beispielsweise Wasserglaskleber aufgebracht und sodann die Kaschierungsbahn aufgebracht, wobei der Kaschierungsbahn dann der Egalisierungseffekt der Kleberschicht zugute kommt.

Gemäß Anspruch 6 kann die Kaschierungsbahn aus einem sich bei Wärmeeinwirkung verflüchtigenden Werkstoff wie Papier bestehen, welches an der Dämmstoffoberfläche durch den Kleber befestigt ist.

Dadurch wird zwar der entsprechende Oberflächenschutz bei der Handhabung im Anschluß an die Herstellung, beim Transport und bei der Lagerung erzielt, ebenso wie bei der Montage; nach in Betriebnahme des Geräts oder dergleichen und Entwicklung entsprechender Wärme verflüchtigt sich jedoch die Kaschierungsbahn, so daß der Wärmedämmkörper im Einsatz im wesentlichen wieder so vorliegt, wie er nach dem Pressen entstanden ist. Abgesehen davon, daß dies für einige Einsatzfälle zu bevorzugen ist, kann hier eine Kaschierungsbahn aus einem billigen, einfachen Material verwendet werden. Insbesondere ist hier auch die Verwendung eines billigeren organischen Klebers möglich, der so gewählt werden kann, daß er sich bei der Wärmeeinwirkung ebenfalls verflüchtigt. Sowohl das Material für die Kaschierungsbahn als auch für den Kleber wird natürlich zweckmäßig so gewählt, daß die Verflüchtigung möglichst rückstandsfrei erfolgt.

Eine besondere Problematik in diesem Zusammenhang ergibt sich jedoch bei der Verwendung derartiger Wärmedämmkörper als Wärmedämmplatten für Hochtemperatureinsatz, wie sie beispielsweise in Elektro-Wärmespeichergeräten zur Wärmedämmung der Speicherkerne eingesetzt sind, wobei eine Belastung mit Temperaturen bis etwa 750° C erfolgt. In diesen Geräten sind zum Teil luftführende Kanäle zwischen Speicherkern und Dämmplatte angeordnet. Insbesondere durch Spannungswechsel infolge häufiger Temperaturänderung wird die Oberfläche der Dämmplatte zusätzlich mechanisch belastet, wobei durch die auftretenden Strömungen Materialerosionen aus der Oberfläche des Wärmedämmkörpers befürchtet werden müssen. Derartige extreme Belastungsfälle treten natürlich auch anderweitig auf, so etwa bei einer Auskleidung von Triebwerksgehäusen, Abgaskanälen oder dgl.

Wie hierzu etwa der nachveröffentlichten DE-A-3 222 679 zu entnehmen ist, hält auch das übliche Glasgewebe der sackartigen Umhüllung der Wärmedämmplatten bei üblicher Verwendung von Borsilikatglas-Filamenten einer solchen Belastung nicht stand, so daß zumindest auf eine Unterstützung durch Quarzglas-Filamente oder eine Fertigung insgesamt aus Quarzglas-Filamenten zurückgegriffen werden muß, was eine erhebliche Kostensteigerung mit sich bringt. Insbesondere für derartige Einsatzfälle ist insbesondere für den Fall einer Kaschierungsbahn aus Papier oder dgl. vorgesehen, daß die Kleberschicht ein solches anorganisches Bindemittel aufweist, daß bei hohen Temperaturen zwischen etwa 500° C und 1000° C Sinterung oder keramische Bindung auftritt, sich also eine harte, mechanisch beanspruchbare und insbesondere abriebs- oder erosionsfeste Oberfläche ergibt. Im Zuge der Aufheizung kann dann die Kaschierungsbahn, die zuvor die mechanische Verstärkung und Sicherung bei der Handhabung bewirkt hat, einfach wegbrennen, so daß im laufenden Betrieb die Wärmedämmkörper mit einer keramisierten, harten Oberfläche vorliegen. Die Schichtdicke des durch die Kleberschicht gebildeten Uberzugs kann dabei dennoch unterhalb von 0,5 mm liegen. Eine Verstärkung dieser keramisierbaren bzw. im Betrieb keramisierten Uberzugsschicht mit einem hohen Anteil an beispielsweise gemahlenen Mineralfasern, die durch das keramische Bindemittel in einen widerstandfähigen Sinterverbund verbacken werden, ergibt eine besonders gute Widerstandsfähigkeit eines solchen Überzugs, wie dies in der bereits genannten EP-A-57 252 mit weiteren Einzelheiten, auf die Bezug genommen wird, erläutert ist.

Auch im Falle der Verwendung eines in der Hitze keramisierenden Bindemittels kann es zweckmäßig sein, wenn die Kleberschicht zusätzlich ein organisches Bindemittel als Zuschlagstoff enthält. Dieses übernimmt bei der Produktion die gute Befestigung und Lagesicherung der Kaschierungsbahn aus Papier oder dgl., so daß sich für die Handhabung des Wärmedämmkörpers ein guter Oberflächenschutz und auch eine entsprechende Erhöhung der Sicherheit gegen Bruch ergibt. Bei Erwärmung etwa im Betrieb über 200° -300° C verbrennt das organische Bindemittel und wird dann auch nicht mehr benötigt.

Wenn im Zuge der Erwärmung des Wärmedämmkörpers zwischen der Verflüchtigung des organischen Bindemittels etwa bei 200° - 300° C und dem Einsetzen einer keramischen Bindung im Bereich zwischen 500° - 1000° C eine "Bindungslücke" auftritt, oder überhaupt kein organisches Bindemittel verwendet wird, da für die Befestigung der Kaschierungsbahn bei der Produktion hierfür kein Bedürfnis besteht, so kann diese Bindungslücke durch ein zusätzliches, erst bei höheren Temperaturen verflüchtigendes Bindemittel etwa auf der Basis von Wasserglas geschlossen werden. Auf diese Weise kann im Zuge der Erwärmung bei Bedarf durch entsprechende Zuschlagstoffe eine lückenlose Stabilisierung der Oberfläche des Wärmedämmkörpers auch bei bereits wegbrennender oder weggebrannter Kaschierung derart erzielt werden, daß beim Einsetzen der keramischen Bindung eine unbeschädigte Oberfläche vorliegt, die dann durch die keramische Bindung bleibend verfestigt wird. Neben einem Bindemittel auf der Basis von Wasserglas eignet sich hierzu eine Vielzahl von Gläsern oder glasbildenden Stoffen, beispielsweise auch Aluminiumsilikat.

Für eine bahnförmige kontinuierliche oder quasi-kontinuierliche Fertigung des Wärmedämmkörpers in einer Fertigungsstraße kann die Kaschierung in der Weise erfolgen, daß eine folienförmige Kaschierungsbahn von einer Vorratsrolle abgewickelt, einseitig mit Kleber versehen und an die zu kaschierende Seite des Wärmedämmkörpers nach dessen Pressung angelegt wird, wobei natürlich auch zwei Kaschierungsbahnen für beide flächigen Seiten des Wärmedämmkörpers zugleich aufgebracht werden können. Auf diese Weise ist auch eine vollständig oder abschnittsweiee kontinuierliche Fertigung eines erfindungsgemäßen kaschierten Wärmedämmkörpers möglich. Im Falle einer Pressung des Preßstoffes für den Wärmedämmkörper in einer sackförmigen Umhüllung aus beispielsweise Glasgewebe ist eine solche kontinuierliche Herstellung nicht oder nur sehr schwierig möglich.

Insbesondere bei Verbindung der Kaschierungsbahn mit einem bei hohen Temperaturen keramisierenden Kleber ist es - in Abweichung von der Lehre der EP-OS 57 252 - zweckmäßig, die Aufschlämmung des Gemisches aus der Trockenmasse und Wasser mit einem Wassergehalt zwischen lediglich etwa 20 und 50, bevorzugt bis 40 Gew.-% der Aufschlämmung bereitzustellen und so auf die entsprechende Kaschierungsbahn aufzutragen, wonach die so beschichtete Kaschierungsbahn mit dem gepreßten Dämmaterial zusammengeführt wird und eine Trocknung des naßbeschichteten Formkörpers vorzugsweise bei erhöhter Temperatur von etwa 100°C bis etwa 150°C erfolgt, wobei aber natürlich auch eine Lufttrocknung in Frage kommt. Durch den verminderten Wassergehalt soll sichergestellt werden, daß eine saubere Beschichtung der Folienbahnen durch übliche Leimauftragmaschinen, Aufsprühen oder dergleichen erfolgen kann und sich auf der laufenden Folienbahn eine Konsistenz des Klebers ergibt, die sich für eine störungsfreie kontinuierliche Fertigung eignet. Weiterhin soll vermieden werden, daß zuviel Feuchtigkeit aus der Aufschlämmung in das hygroskopische Wärmedämmeterial eindringt.

Weitere Einzelheiten, Merkmale und Vorteile der Erfindung ergeben sich aus der nachfolgenden Beschreibung von Ausführungsbeispielen anhand der Zeichnung.

Es zeigt

Fig. 1 einen Ausbruch aus einem erfindungsgemäßen Wärmedämmkörper in perspektivischer Ansicht,

Fig. 2 die Einzelheit aus Kreis·A in Fig. 1 in stark vergrößerter Darstellung gemäß einer ersten Ausführungsform der Erfindung,

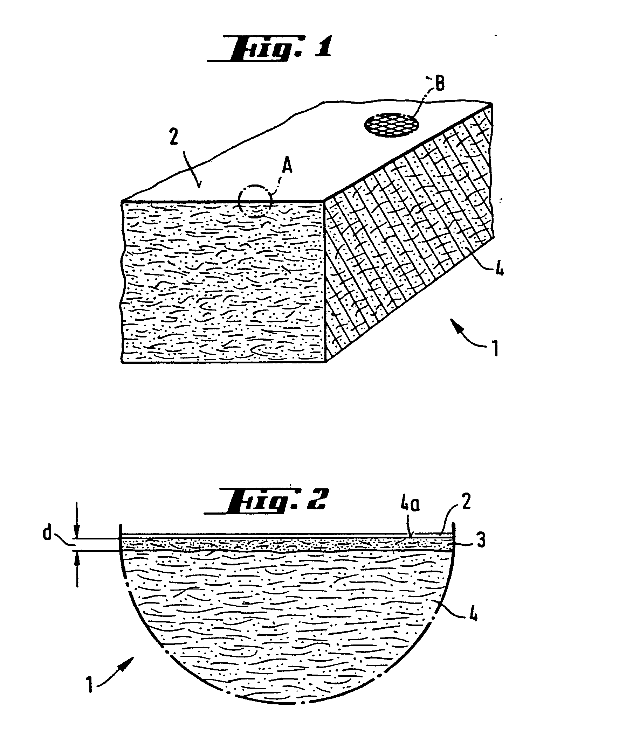

In Fig. 1 ist mit 1 ein Wärmedämmkörper bezeichnet, der mit einer Kaschierungsbahn 2 an einer seiner Oberflächenversehen ist.·

Wie hierzu aus der Einzelheit gemäß Fig. 2 ersichtlich ist, kann die Kaschierungsbahn 2 im Beispielsfalle aus einer Aluminiumfolie bestehen, die über einen Kleber gegenüber dem Wärmedämmkörper 7 befestigt ist, der eine Kleberschicht 3 bildet. Es kann beispielsweise ein anorganischer Kleber wie ein Wasserglaskleber, in flüssiger oder dünnflüssiger Verarbeitungskonsistenz, also mit einer solchen Verarbeitungskonsistenz gewählt werden, die beim Auftragen ein Eindringen des Klebers in die Oberfläche 4a des mit 4 bezeichneten Ppreßstoffes des Wärmedämmkörpers 1 ermöglicht. Die Dicke d der eingedrungenen Kleberschicht 3 liegt im Beispielsfalle bei 0,3 mm und gewährleistet eine sichere Verankerung des Klebers in dem oberflächennahen Materialbereich des Preßstoffes 4. Durch die Kleberschicht 3 wird die Kaschierungsbahn 2 sicher gehalten.

Alternativ kann zur Bildung der Kleberschicht 3 auch ein organischer, insbesondere bei Wärmeeinwirkung leicht verflüchtigender Kleber verwendet werden, und als Material für die Kaschierungsbahn 2 ein ebenfalls bei Wärmeeinwirkung verflüchtigendes Material, wie Papier, Kunststoff oder ein Gewebe oder Gelege aus künstlicher oder natürlicher Faser, wie Jute, so daß im praktischen Einsatz des Wärmedämmkörpers 1 in der Nachbarschaft einer entsprechend starken Wärmequelle eine Verflüchtigung insbesondere der Kaschierungsbahn 2 und gegebenenfalls auch zumindest der oberflächennahen Bereiche des Klebers der Kleberschicht 3 erfolgt. Dann liegt im Einsatz der Wärmedämmkörper in der Form vor, wie er noch ohne Kaschierung den Preßvorgang verlassen hat. Die Dicke der Kaschierungsbahn 2 sowie der Kleberschicht 3 bzw. die dafür eingesetzten Materialmengen können so gering gehalten werden, daß eine Verflüchtigung mit nur sehr geringen Rückständen und auch geringer Umgebungsbelastung erfolgt.

Die Kleberschicht 3 kann an der Oberfläche des Preßstoffes 4 des Wärmedämmkörpers 1 zusätzlich eine Deckschicht bilden, wenn die Oberfläche des Preßstoffes 4 unregelmäßig ausgebildet ist, wie dies beispielsweise insbesondere dann der Fall ist, wenn der Preßstoff 4 mit einem in der Wärme aushärtenden Bindemittel versehen ist, welches lokal unterschiedliche Schrumpfungen und sonstige Verformungen bei der aushärtenden Wärmebehandlung verursacht. Die Deckschicht, deren Oberfläche durch Rakeln oder dergleichen zusätzlich egalisiert sein kann, weist eine Schichthöhe oberhalb der Oberfläche 4a auf, welche die Unebenheiten der Oberfläche 4a so weit überdeckt, daß sich eine ausreichend glatte Oberfläche ergibt.

Dabei ist zu beachten, daß die in Fig. 2 veranschaulichte Darstellung der Kleberschicht 3 schematisch vereinfacht dargestellt ist und in der Praxis oberhalb der in den Preßstoff 4 eingedrungenen Kleberschicht 3 auch ein nicht eingedrungener Teil des Klebers als Deckschicht vorliegen kann.

Zur Verbesserung der Haftung der Kaschierungsbahn 2 an der Oberfläche des Wärmedämmkörpers 7 kann die Kaschierungsbahn 2 von der Außenseite her beispielsweise mittels Prägewalzen oder dergleichen strukturiert werden, wobei Beeinträchtigungen des Verbundes im Bereich solcher verformender Einwirkungen auf die Oberfläche 4a des Preßstoffes 4 dadurch kompensiert werden können, daß die so vereinzelten Teilchen durch die Kleberschicht 3 wieder miteinander verbacken werden bzw. unterhalb der Kaschierungsbahn 2 eine Kleberschicht als Deckschicht vorliegt, welche entsprechende Verformungen auffängt. Eine solche Strukturierung ist in Fig. 1 im Kreis B angedeutet.

Insbesondere für Hochtemperatureinsätze, beispielsweise in Elektro-Wärmespeicheröfen, Abgaskanäle oder dergleichen, ist die Verwendung einer eine Deckschicht bildenden Kleberschicht 3 aus in der Hitze keramisierendem Bindemittel außerordentlich vorteilhaft, da sich hierdurch eine ausreichend harte und insbesondere in der Gasströmung erosionsfeste sowie Spannungswechseln standhaltende Oberfläche ergibt.

Bei Bedarf kann eine zusätzliche mechanische Verstärkung·einer solchen Deckschicht dadurch erfolgen, daß zumindest in einer Zugbelastungsrichtung, zweckmäßig jedoch in zwei aufeinander senkrecht stehenden Zugbelastungsrichtungen, Verstärkungsfäden an der Kleberschicht 3 vorgesehen sind. Derartige Verstärkungsfäden können in das Material der Deckschicht eingebettet ssein und bestehen dann vorteilhaft aus ausreichend hitzebeständigem Material, wie Glasfaser, so daß die Verstärkungsfäden auch bei der Hitzeeinwirkung im Betrieb erhalten bleiben. Infolge der Abdeckung der Verstärkungsfäden durch den Kleber der Deckschicht und die Kaschierungsbahn 2 sind die Verstärkungsfäden nicht in vollem Umfange der auftretenden Wärmewirkung ausgesetzt, so daß sie gegebenenfalls aus Borsilikatglas-Filamenten bestehen können; bei Bedarf können die Verstärkungsfäden jedoch ganz oder teilweise auch aus höhertemperaturbeständigem Material, wie Quarzglas-Filamenten, gefertigt werden.

Alternativ können Verstärkungsfäden auch als Kaschierungsbahn 2 gemäß Fig. 2 an der Außenseite der Kleberschicht 3 vorgesehen werden, wo sie diese bei Handhabung und Montage schützend abdekken können. Dabei können die Verstärkungsfäden mit einem organischen Kleber, gegebenenfalls einem Lack, an der Oberfläche 4a des Wärmedämmkörpers 1 befestigt sein, so daß sie zusammen mit dem Kleber durch Temperatureinwirkung im Betrieb verflüchtigen, oder aber mit einem temperaturbeständigen Bindemittel gehalten sein, so daß die Verstärkungsfäden sich nach der Montage im Betrieb verflüchtigen, eine hochtemperaturbeständige Deckschicht hingegen verbleibt, sofern überhaupt stark hitzebelastet.

Die Verstärkungsfäden sind zweckmäßig im Form eines Geleges oder, insbesondere als Kaschierungsbahn 2 an der Außenoberfläche, in Form eines Gewebes aufgebracht, so daß sie Zug aus wechselnden Richtungen widerstehen können.

Bei einem in der Hitze keramisierenden Kleber wird zweck mäßig die recht hoch bei gegebenenfalls annähernd 7000°C liegende Keramisierungstemperatur erst im Betrieb erreicht, so daß eine vorherige starke Erwärmung des Wärmedämmkörpers und der dadurch erforderliche Energieaufwand vermieden werden können. Für diesen Fall ergibt die Kaschierungsbahn 2 eine Erhöhung der mechanischen Widerstandsfähigkeit bei der Handhabung, dem Transport und der Lagerung der Wärmedämmkörper 1.

Da die Kaschierungsbahn 2 dann im wesentlichen der Erleichterung der produktion und der anschließenden Verbesserung der Handhabbarkeit dient, kann diese in besonders kostengünstiger Weise aus einem sich in der Wärme verflüchtigenden Stoff bestehen, wie etwa Papier.

Soweit vor Eintritt der Keramisierungstemperatur die Bindewirkung der keramischen Kleberschicht 3 ungünstig gering ist, kann diese mit einem organischen Bindemittel als Zuschlagstoff versehen werden, welches für eine saubere Haftung der Kaschierungsbahn 2 am Wärmedämmkörper 7 sorgt, soweit Temperaturen von 200°C bis 300°C nicht überschritten werden. Sofern bis in Bereiche oberhalb von etwa 200°C bis 300°C eine entsprechende Stabilisierung der Oberfläche der Kleberschicht 3 erforderlich ist, wenn die Kaschierungsbahn 2 beispielsweise aus Kraftpapier weggebrannt ist und vor Eintritt einer keramischen Bindung bereits entsprechende Belastungen etwa durch Gasströmungen auftreten, kann weiterhin ein Glas oder glasbildender Stoff als Zuschlagstoff verwendet werden, beispielsweise Wasserglas, um bis in höhere Temperaturen hinein eine Bindungswirkung zu erzielen, die erst bei annäherndem Erreichen der Betriebs-Endtemperatur durch die keramische Bindung abgelöst wird.

Als Kleberschicht 3 mit Keramisierung bei hohen Temperaturen eignet sich ein Material, wie es gemäß der EP-A-57 252 für die Lagerschicht für eine elektrische Heizwendel einer strahlungsbeheizten Kochplatte verwendet wird, so daß wegen Einzelheiten in diesem Zusammenhang in vollem Umfange auf die EP-A-57 252 Bezug genommen werden kann. Jedoch eignet sich grundsätzlich je nach Besonderheiten des Anwendungsfalles jeder anorganische Überzugsstoff zur Bildung der Kleberschicht 3, der in der beispielsweise in der Feuerfestindustrie üblichen Weise Silikate oder silikatbildende Stoffe enthält, die bei hohen Temperaturen vor dem Erweichen eines entsprechenden Stützgerüstes aus Fasern oder dergleichen erweichen und so das noch nicht erweichte Stützgerüst durch keramische Bindung stabilisieren, also gewissermaßen zusammensintern odern verschweißen.

Als in diesem Sinne ganz besonders geeignet hat sich ein Material auf der Basis von Kieselsol als keramische Bindemittel erwiesen, wie es etwa aus der DE-A-1 669 267 als Beschichtungsmaterial für Metallgießformen oder Bodenplatten hierfür sowie Pfannen, Fördergefäße oder Ofen in der Gießereitechnik bekannt ist also solche Bauteile, deren Oberflächen mit der Schmelze in Berührung kommen oder aus anderen Gründen einer starken Hitzebelastung unterliegen. Das Kieselsol als keramisches Bindemittel wird zusammen mit anorganischen Fasern wie Aluminiumsilikatfasern oder Quarzfasern sowie ggf. weiteren anorganischen Füllstoffen in einer Aufschlämmung aufgebracht. Als anorganische Fasern für die Beschichtungsmasse kommen grundsätzlich alle entsprechend temperaturbeständigen Fasern wie Aluminiumsilikatfasern, Quarzfasern usw. in Frage, wobei jedoch Aluminiumsilikatfasern aus Kostengründen in der Regel bevorzugt sein werden. Die Fasern müssen so eng beieinanderliegen, daß das Kieselsol dazwischen eine Verbindung zu benachbarten Fasern bildet und an diesen haftet, statt eigene, nicht an Füllstoff gebundene Partikel zu bilden. Die Fasern wirken somit primär als Dispergierungsmittel für das Kieselsol, um mit diesem eine geschlossene Oberfläche zu bilden.

Auch Aluminiumsilikatfasern sind jedoch noch teuerer als die meisten anorganischen körnigen Zuschlagstoffe wie gemahlenes Aluminiumoxid, Quarzsand, Mullit, Zirkonoxid usw., so daß die Fasern aus Kostengründen durch körnige Füllstoffe gestreckt werden können, die ähnlich wie die Fasern, wenn auch in geringerem Umfange, als Dispergierungsmittel für das Kieselsol dienen können. Als anorganische körnige Zuschlagstoffe kommen weiterhin Tone und Kaolin in Frage. Bevorzugt ist Aluminiumoxid ggf. mit einer Zumischung aus Kaolin, welches die Geschmeidigkeit der Beschichtung verbessert.

Die Menge an Kieselsol ergibt sich im wesentlichen aus dem Bedarf an Bindemittel für die geschlossene Oberflächenbeschichtung im Hinblick auf die gewünschte Verbackung der Füllstoffe miteinander. Die Menge des Kieselsol hat eine Untergrenze dort, wo sich eine zu geringe Abriebfestigkeit der Oberfläche durch zu geringen Bindemittelanteil ergibt. Aus diesem Gesichtspunkt darf der Anteil des Kieselsol als Feststoff nicht geringer sein als etwa ein Zehntel der damit zu bindenden Füllstoffe und Fasern in der Oberflächenbeschichtung, so daß das Kieselsol in der geschlossenen Oberflächenbeschichtung jedenfalls in einem Feststoffanteil von 10 Gew.-% oder mehr vorliegt. Eine Erhöhung des Kieselsolanteils ergibt zunächst eine Erhöhung der Abriebfestigkeit durch bessere Einbindung der Fasern und der körnigen Füllstoffe sowie weiterhin eine glänzende und glattere Oberfläche. Eine Obergrenze für den Kieselsolanteil in der geschlossenen Oberflächenbeschichtung liegt da, wo das Kieselsol dazu neigt, sich in körniger Form zu partikulieren und auf diese Weise brüchig zu werden. Dies wird durch einen ausreichend hohen Füllstoff, insbesondere Fasergehalt, des Kieselsols vermieden. Daher darf der Anteil des Kieselsol bezogen auf die Menge der Füllstoffe in der Beschichtungsmasse nur etwa bei 1:1 liegen, so daß also mindestens ebenso viele Gewichtsanteile Füllstoffe wie Trockengewichtsanteil Kieselsol in der geschlossenen Oberflächenbeschichtung vorhanden sind. Hierbei sollte jedoch der Anteil der in Faserform vorliegenden Füllstoffe nicht unter einem Drittel der Füllstoffe der Oberflächenbeschichtung liegen, um die Fasern ausreichend als Netzwerkbildner zur Bildung eines geschlossenen Films wirksam werden zu lassen.

Die vorstehenden Angaben beziehen sich auf die Gewichtsanteile in der fertigen Beschichtung, wobei also die Trockenmasse des Kieselsol berücksichtigt ist. Das wäßrige Kieselsol, also die kolloidale Kieselsäure, besitzt jedoch einen Wasseranteil von zwischen etwa 60 und 70 %, der ggf. zusammen mit einer zusätzlichen Wasserzugabe zur Verdünnung dazu dient, durch Einstellung der Viskosität oder allgemein des Fließverhaltens das Bindemittel mit den Füllstoffen zu vermischen und einen geschlossenen Auftrag zu ermöglichen. Dies kann unterstützt werden durch eine Zugabe von Netzmitteln, wie dies an sich bekannt ist, wobei natürlich auch eine mechanische Unterstützung durch Rakeln oder Walzen in Frage kommt.

Nachfolgend werden zwei Beispiele für eine solche Überzugsmasse für die Kleberschicht 3 angegeben:

**Beispiel 1**

58,8 Gew.-% wäßriges Kieselsol (30 % Feststoffanteil)
23,5 Gew.-% Aluminiumsilikatfasern
11,9 Gew.-% Aluminiumoxid
5,9 Gew.-% Kaolin
Nach Herausrechnung des Wasseranteils der kolloidalen Kieselsäure der obigen Beschichtungsmasse ergibt sich eine Feststoffverteilung von etwa 30 Gew.-% Kieselsol, 40 Gew.-% Aluminiumsilikatfasern, 20 Gew.-% Aluminiumoxid und 10 Gew.-% Kaolin.

**Beispiel 2**

70 Gew.-% wäßriges Kieselsol (30 % Feststoffanteil)
13,3 Gew.-% Aluminiumsilikatfasern
6,7 Gew.-% Aluminiumoxid
10 Gew.-% Kaolin
Nach Herausrechnung des Wasseranteils der kolloidalen Kieselsäure der vorstehenden Beschichtungsmasse ergibt sich eine Feststoffverteilung von etwa 41 Gew.-% Kieselsol, 26 Gew.-% Aluminiumsilikatfasern, 13 Gew.-% Aluminiumoxid und 20 Gew.-% Kaolin.

Sofern ein solches Beschichtungsmaterial auf der Basis von Kieselsol mit mineralischen Fasern zusammen mit mineralischen Multifilament-Verstärkungsfäden verwendet wird, kann der Anteil der mineralischen Fasern in der Beschichtung etwas niedriger gewählt werden, soweit die Filamente der Verstärkungsfäden die Funktion der mineralischen Fasern übernehmen können.

Zur Erleichterung des Auftrags können gemahlene anorganische Fasern verwendet werden, die jedoch immer noch eine Länge in der Größenordnung von zehntel Millimetern oder wenig darunter besitzen, was im Hinblick auf einen üblichen Faserdurchmesser von einigen μm auch bei einer solch kurzen Faserlänge noch einen klar faserigen Charakter mit einer gegenüber dem Durchmesser um Größenordnungen größeren Länge ergibt. Da die Teilchen des Kieselsol außerordentlich klein sind, gelingt auch mit derart kurzen, gemahlenen Fasern eine einwandfreie Schichtbildung, soweit der Faseranteil gegenüber dem körnigen Füllstoffanteil nicht zu stark verringert wird. Im allgemeinen sollte das Verhältnis der körnigen Füllstoffe zu den Fasern der Beschichtung nicht größer als 3 : 1, besser nicht größer als 2 : 1 sein, so daß der Anteil des in Faserform vorliegenden Füllstoffes der Oberflächenbeschichtung in jedem Falle erheblich bleibt.

Die Erfindung ist auch bei Wärmedämmkörpern anwendbar, die entsprechend der Lehre der EP-A- 59 860 einen hohen Langfaseranteil enthalten. Das Material der EP-A- 59 860 ist jedoch nicht nur ausgezeichnet biegbar, sondern weist auch eine Biegefestigkeit etwa entsprechend des "gehärteten" Materials der DE-A-2 942 087 auf, ohne einer energieaufwendigen Härtung zu bedürfen. Bei keinen verformenden Biegebelastungen ausgesetzten Körpern wie Einsatzkörpern zur Dämmung von Kochplatten oder ähnlichen, gegebenenfalls dicken Körpern kann somit statt gehärtetem oder ungehärtetem Material auch Material mit hohem Langfaseranteil gemäß EP-A- 59 860 verwendet und erfindungsgemäß kaschiert bzw. beschichtet werden.

**Patentansprüche**

1. Durch Pressen verdichteter, formsteifer Wärmedämmkörper (1) aus einem hochdispersen Wärmedämmaterial aus einem aus der Flammenhydrolyse gewonnenen mikroporösen Oxidaerogel, insbesondere Kieselsäureaerogel und/oder Aluminiumoxidaerogel, dem Mineralfasern und gegebenenfalls Trübungsmittel zugesetzt sind und der eine nach dem Pressen wenigstens einseitig aufgebrachte Kaschierungsbahn (2) aufweist, die mittels eines Klebers an der Oberfläche (4a) des Wärmedämmkörpers (1) befestigt ist, dadurch gekennzeichnet, daß der Kleber bei der Verarbeitung eine fließfähige, ein Eindringen in das Wärmedämmaterial ermöglichende Konsistenz besitzt derart, daß die Dicke (d) der durch den eingedrungenen Kleber gebildeten Kleberschicht (3) unter der Oberfläche (4a) des Wärmedämmstoffes (4) geringer als 1 mm, vorzugsweise geringer als 0,5 mm ist.

2. Wärmedämmkörper nach Anspruch 1, gekennzeichnet durch einen Kleber auf der Basis von Wasserglas.

3. Wärmedämmkörper nach einem der Ansprüche 1 bis 2, dadurch gekennzeichnet, daß die Kaschierungsbahn (2) eine Metallfolie wie eine Aluminiumfolie oder eine Edelstahlfolie ist.

4. Wärmedämmkörper nach einem der Ansprüche 1 bis 2, dadurch gekennzeichnet, daß die Kaschierungsbahn (2) ein Gewebe oder Gelege aus künstlicher oder natürlicher Textilfaser oder mineralischer Faser, wie Glasfaser, ist.

5. Wärmedämmkörper nach einem der Ansprüche 1 bis 2, dadurch gekennzeichnet, daß die Kaschierungsbahn (2) aus einem sich bei Wärmeeinwirkung verflüchtigenden Werkstoff, wie Papier, besteht.

6. Wärmedämmkörper nach Anspruch 5, dadurch gekennzeichnet, daß die Kleberschicht (3) aus einem sich bei Wärmeeinwirkung verflüchtigenden Kleber, wie einem anorganischen Kleber, besteht.

7. Wärmedämmkörper nach einem der Ansprüche 1 bis 6, dadurch gekennzeichnet, daß die Kleberschicht (3) ein anorganisches Bindemittel aufweist, welches bei Wärmeeinwirkung im Betrieb durch Keramisierung, Sinterung oder dergleichen eine harte, erosionsfeste Oberfläche bildet.

8. Wärmedämmkörper nach einem der Ansprüche 1 bis 7, dadurch gekennzeichnet, daß die Kleberschicht (3) mit einer Unebenheiten der Oberfläche (4a) des Warmedämmkörpers (1) ausgleichenden Schichtdicke aufgebracht ist.

9. Wärmedämmkörper nach Anspruch 1, gekennzeichnet durch einen Kleber auf der Basis eines keramischen Bindemittels.

10. Wärmedämmkörper nach Anspruch 8 bis 9, dadurch gekennzeichnet, daß die eine Deckschicht oder einen Uberzug bildende Kleberschicht (3) mit einer oberhalb der Oberfläche (4a) des Wärmedämmkörpers (1) liegenden Schichtdicke von zwischen etwa 0,05 und 0,5 mm, vorzugsweise 0,2 und 0,3 mm vorliegt.

11. Wärmedämmkörper nach Anspruch 8 bis 10, dadurch gekennzeichnet, daß die eine Deckschicht oder einen Überzug bildende Kleberschicht (3) mineralische Fasern enthält.

12. Wärmedämmkörper nach Anspruch 11, dadurch gekennzeichnet, daß die Kleberschicht (3) aus Kieselsol und mineralischen Fasern sowie gegebenenfalls anorganischen Füllstoffen besteht.

13. Wärmedämmkörper nach einem der Ansprüche 8 bis 12, dadurch gekennzeichnet, daß in die oberhalb der Oberfläche (4a) des Wärmedämmkörpers (1) liegenden Bereiche der Kleberschicht (3) Verstärkungsfäden eingebettet sind.

14. Verfahren zur Herstellung eines Wärmedämmkörpers nach einem der Ansprüche 1 bis 13, bei dem der Wärmedämmstoff kontinuierlich oder quasi-kontinuierlich verdichtet und wenigstens einseitig mit einer mittels eines Klebers befestigten Kaschierungsbahn versehen wird, dadurch gekennzeichnet, daß als Kaschierungsbahn eine geschlossenflächige Kaschierungsbahn oder ein Verstärkungsfasergelege bzw. -gewebe verwendet wird, wobei die geschlossenflächige Kaschierungsbahn an der der Preßstoffbahn zugewandten Seite oder die Preßstoffbahn an der der Kaschierungsbahn zugewandten Seite bzw. nach Aufbringen des Verstärkungsfasergeleges bzw. -gewebes mit dem Kleber beschichtet wird, der bei der Verarbeitung eine fließfähige, ein Eindringen in das Wärmedämmaterial ermöglichende Konsistenz besitzt derart, daß die Dicke der durch den eingedrungenen Kleber gebildeten Kleberschicht unter der Oberfläche des Wärmedämmstoffes geringer als 1 mm, vorzugsweise geringer als 0,5 mm ist, und daß die Kaschierungsbahn bzw. der Kleber an die Preßstoffbahn unter Erzielung einer Verbindungswirkungswirkung angedrückt wird.

15. Verfahren nach Anspruch 14, dadurch gekennzeichnet, daß der Kleber mittels Sprühens, Auftrags oder dergleichen in einer Aufschlämmung mit einem Wassergehalt von zwischen etwa 20 und 50 Gew.-%, vorzugsweise unter 40 Gew.-%, der Aufschlämmung auf die Preßstoffbahn aufgebracht wird.

16. Verfahren nach Anspruch 15, dadurch gekennzeichnet, daß der auf diese Weise naß beschichtete Preßstoff vorzugsweise bei erhöhter Temperatur von etwa 100° C bis 150° C getrocknet wird.

**Claims**

1. Rigid compressed heat-insulating body 1 of high dispersive heatinsulating material produced from a microporous oxide aerogel obtained by flame hydrolysis, especially silicic acid aerogel and/or aluminium oxide aerogel to which mineral fibres and, if desired, turbidity-producing agents are added and which is provided with a facing strip 2 which, after pressing, is applied to at least one side and which is secured by means of an adhesive to the surface 4a of the heat-insulating body 1, characterised in that, during working, said adhesive possesses a flowable consistency enabling it to penetrate the heat-insulating material whereby the thickness $\underline{d}$ of the adhesive layer 3 formad by tha penetratinc adhesive under the surface 4a of the heat-insulating matsrial 4 is less than 1 mm and preferably less than 0.5 mm.

2. Heat-insulating body in accordance with claim 1, characterised in that the adhesive is on a water glass base.

3. Heat-insulating body in accordance with claims 1 and 2, characterised in that the facing strip 2 is a metal foil such as aluminium foil or refined steel foil.

4. Heat-insulating body in accordance with claims 1 and 2 characterised in that the facing strip 2 is a web or layer of synthetic or natural textile fibres or mineral fibres such as glass fibre.

5. Heat-insulating body in accordance with claims 1 and 2 characterised in that the facing strip 2 consists of a work material such as paper which volatilises under the influence of heat.

6. Heat-insulating body in accordance with claim 5, characterised in that the adhesive layer 3 consists of an adhesive which volatilises under the influence of heat such as an inorganic adhesive.

7. Haat-insulating body in accordance with one of claims 1 to 6, characterised in that the adhesive layer 3 contains an inorganic binding agent which, as a result of heat influence during working through ceramication, vitrification or the like, forms a hard, erosion-proof surface.

8. Heat-insulating body in accordance with one of claims 1 to 7, characterised in that the adhesive layer 3 is applied with a thickness of layer compensating for uneven portions of the surface 4a of the heat-insulating body 1.

9. Heat-insulating body in accordance with claim 1, characterised in that the adhesive is on a ceramic binding agent base.

10. Heat-insulating body in accordance with claims 8 and 9, characterised in that the adhesivs layer 3 forming a protective layer or coating has a layer thickness of betwsen 0.05 mm and 0.5 am, preferably between 0.2 mm and n.3 mm above the surface 4a of the heat-insulating body 1.

11. Heat-insulating body in accordance with claims 8 to 10, characterised in that the adhesive layer 3 forming a protective layer or coating contains mineral fibres.

12. Heat-insulating body in accordance with claim 11, characterised in that the adhesive layer 3 consists of a colloidal solution of silica and aineral fibres, possibly together with inorganic fillers.

13. Heat-insulating body in accordance with one of claims 8 to 12, characterised in that reinforcing filaments are embedded in the areas of ths adhesive layer 3 located above the surface 4a of the heat-insulating body 1.

14. Method of manufacture of a heat-insulating body according to one of claims 1 to 13, in which the heat-insulating material is compressed continuously or virtually continuously and is provided at least on one side with a facing strip which is attached by use of an adhesive, characterised in that a closed-surface facing strip or a reinforcing fibre layer or web is employed as facing strip, which is coated with the adhesive on the side towards the strip of compressed material, or ths compressed material strip is coated with adhesive on the side towards the facing strip, or these are coated with adhesive after application of the reinforcing fibre layer or web, said adhesive possessing a consistency which is flowable during working and causes penetration of the adhesive into the heat-insulating material whereby the thickness of the adhesive layer formed by the penetrating adhesive beneath the surface of the heat-insulating material is less than 1 mm and preferably less than 0.5 mm, and in that the facing strip or ths adhesive is pressed into contact with the strip of compressed material in order to produce a bonding effect.

15. Method in accordance with claim 14 characterised in that the adhesive is applied to the strip of compressed material by spraying, spreading or the like in a suspension having a water content of between approximately 20% and 50% by weight and preferably less than 40% by weight of the suspension.

16. Method in accordance with claim 15 characterised in that the compressed material carrying such a moist coating is dried, preferably at a raised temperature between approximately 100° C and 150° C.


**Revendications**

1. Corps calorifuge indéformable (1), densifié ou moulé par injection, d'un matériau calorifuge fortement dispersé, d'un aérogel d'oxyde microporeux obtenu par hydrolyse à la flamme, en particulier un aérogel d'acide silicique et/ou un aérogel d'oxyde d'aluminium, auquel on ajoute des fibres minérales et éventuellement un agent opacifiant et qui présente une bande de doublage (2) appliquée au moins sur une face après l'injection, qui est fixée au moyen d'une colle à la surface (4a) du corps calorifuge (1), caractérisé en ce que la colle possède lors du traitement une consistance fluide, permettant une pénétration dans le matériau calorifuge, de telle sorte que l'épaisseur (d) de la couche de colle (3) formée par pénétration de la colle sous le surface (4a) du corps calorifuge (1) est inférieure à 7 mm, de préférence à 0,5 mm.

2. Corps calorifuge selon la revendication 1, caractérisé par une colle à base de verre soluble.

3. Corps calorifuge selon l'une des• revendications 1 et 2, caractérisé en ce que la bande de doublage (2) est une feuille métallique telle qu'une feuille d'aluminium ou une tôle ou feuille d'acier inoxydable.

4. Corps calorifuge selon l'une des revendications 1 et 2, caractérisé en ce que la bande de doublage (2) est un tissu ou une nappe de fibres textiles ou de fibres minérales telles que des fibres de verre.

5. Corps calorifuge selon l'une des revendications 1 et 2, caractérisé en ce que la bande de doublage (2) consiste en un produit se volatilisant sous l'action de la chaleur, comme le papier.

6. Corps calorifuge selon le revendication 5, caractérisé en ce que la couche de colle (3) consiste en une colle se volatilisent sous l'action de la chaleur, comme une colle inorganique.

7. Corps calorifuge selon l'une des revendications 1 à 6, caractérisé en ce que le couche de colle (3) présente un liant inorganique qui forme en service sous l'action de la chaleur une surface dure resistante a l'érosion, par céramisation, frittage ou analogues.

8. Corps calorifuqe selon l'une des revendications 1 à 7, caractérisé en ce que la couche de colle (3) est appliquée à une épaisseur de couche compensant les aspérités de la surface (4a) du corps calorifuge (7).

9. Corps calorifuge selon la revendication 7, caractérisé par une colle à base d'un liant céramique.

10. Corps calorifuge selon les revendications 8 et 9, caractérisé en ce que la couche de colle (3) formant la couche de recouvrement ou un enduit a une épaisseur de couche au-dessus de la surface (4a) du corps calorifuge (7) comprise entre environ 0,05 et 0,5 mm, de préférence entre 0,2 et 0,3 mm.

11. Corps calorifuge selon les revendications 8 à 10, caractérisé en ce que la couche de colle (3) formant une couche de recouvrement ou un enduit contient des fibres minérales.

12. Corps calorifuge selon la revendication 11, caractérisé en ce que la couche de colle (3) consiste en un sol de silice et des fibres minérales ainsi éventuellement que des charges inorganiques.

13. Corps calorifuge selon l'une des revendications 8 à 12, caractérisé en ce que des fils de renforcement sont noyés dans les zones de la couche de colle (3) situées au-dessus de la surface (4a) du corps calorifuge (1).

14. Procédé pour la fabrication d'un corps calorifuge selon l'une des revendications 1 à 13, dans lequel la matière calorifuge est injectée (densifiée) en continu ou en quasi continu et munie au moins sur une face d'une bande de doublage fixée au moyen d'une colle, caractérisé en ce que l'on utilise comme bande de doublage une bande de doublage à surface fermée ou une nappe de fibres ou tissu de renforcement, la face de la bande de doublage à surface fermée tournée vers la bande de matière injectée, ou la face de la bande de matière injectée tournée vers la bande de doublage, respectivement, étant enduite après application de la couche de fibres ou du tissu de renforcement avec la colle, qui possède lors du traitement une consistance fluide permettant une pénétration dans le matériau calorifuge, de telle sorte que l'epaisseur de la couche de colle formée par la pénétration de la colle sous la surface de la matière calorifuge est inférieure à 1 mm, de préférence inférieure à 0,5 mm, et en ce que la bande de doublage ou la colle, respectivement, est appliquée sur la bande de matière de moulage avec obtention d'un effet de liaison.

15. Procédé selon la revendication 14, caractérisé en ce que la colle est appliquée sur la bande de matière à mouler par pulvérisation, enduction ou analogue dans une suspension ou barbotine ayant une teneur en eau comprise entre environ 20 et 50 % en poids, de préférence de moins de 40 % en poids.

16. Procédé selon la revendication 15, caractérisé en ce que la matière de moulage ou à mouler enduite de cette manière à l'état humide est séchée de préférence à température élevée d'environ 100 à 150° C.

**Fig. 1**

**Fig. 2**